# EUROPÄISCHE PATENTSCHRIFT

(11) **EP 2 960 097 B1**
(45) Veröffentlichungstag und Bekanntmachung des Hinweises auf die Patenterteilung: **08.12.2021**
(21) Anmeldenummer: 15167951.1
(22) Anmeldetag: 18.05.2015
(51) Int. Cl.: B60K 37/04

(54) **VERFAHREN UND VORRICHTUNG ZUM ANZEIGEN EINES FAHRZEUGSPEZIFISCHEN PARAMETERS IN EINEM FAHRZEUG**
METHOD AND DEVICE FOR DISPLAYING A VEHICLE-SPECIFIC PARAMETER IN A VEHICLE
PROCÉDÉ ET DISPOSITIF D'AFFICHAGE D'UN PARAMÈTRE SPÉCIFIQUE AU VÉHICULE DANS UN VÉHICULE

(30) Priorität: 24.06.2014 DE 102014212061
(43) Veröffentlichungstag der Anmeldung: 30.12.2015
(73) Patentinhaber: Volkswagen Aktiengesellschaft, 38440 Wolfsburg (DE)
(72) Erfinder: Wagner, Volkmar, 10965 Berlin (DE); Jun, Mi-Ran, 10965 Berlin (DE); Petersen, Sönke, 12205 Berlin (DE); Schriever, David, 38176 Wendeburg (DE)

(56) Entgegenhaltungen:
- EP-A1- 2 487 648
- DE-A1-102010 016 043
- US-A1- 2005 057 377
- US-A1- 2012 300 072

## Beschreibung

Die Erfindung betrifft ein Verfahren und eine Vorrichtung zum Anzeigen eines fahrzeugspezifischen Parameters für ein Fahrzeug.

Die Anzahl von Informationen, die einem Fahrzeugführer aufgrund der steigenden Anzahl von Komforteinrichtungen angezeigt werden, steigt ständig. Zu den Komforteinrichtungen, die in modernen Fahrzeugen eingesetzt werden zählen Navigationseinrichtungen, Telekommunikationseinrichtungen, Fahrerassistenzsystemen und Warnhinweise zu einer Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedien- und Anzeigeeinrichtungen in der Mittelkonsole angeordnet. Des Weiteren weisen solche Fahrzeuge ein so genanntes Kombinationsinstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombinationsinstrumente neben herkömmlichen mechanischen Rundinstrumenten auch frei programmierbare Displays auf, welche die mechanischen Rundinstrumente ersetzen und zusätzlich Informationen einer Navigationseinrichtung, einer Telekommunikationseinrichtung und insbesondere der Fahrerassistenzsysteme darstellen. Die Darstellung umfassender Informationen im Kombinationsinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombinationsinstrument dargestellt werden, ergibt sich allerdings das Problem, dass der Fahrzeugführer die gewünschte Information nicht mehr schnell und intuitiv erfassen kann und von der Informationsfülle auf dem Display des Kombinationsinstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombinationsinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann. Gleichzeitig sollten solche Informationen angezeigt werden, die für den Fahrzeugführer in der jeweiligen Fahrsituation besonders relevant sind. Auf diese Weise wird durch die Anzeige- und Bedienkonzepte ein Beitrag zum sicheren Führen des Fahrzeugs geleistet.

Aus der DE 43 07 367 A1 ist eine Anzeigeeinrichtung für ein Fahrzeug bekannt, die einen Bildschirm aufweist, der einen Bereich umfasst, in dem eine über Bedienelemente aufgerufene, frei wählbare Zustandsinformation in unterschiedlicher, vom Bediener wählbarer Form anzeigbar ist.

Aus der US 2012/300072 A1 ist ein Verfahren zur Kollisionsvermeidung bekannt. Bei dem Verfahren wird eine Sicht einer Kamera auf einer Anzeigefläche dargestellt. Das System verwendet dabei auf der Anzeigefläche dargestellte Linien, um einen Abstand zwischen zwei Fahrzeugen zu berechnen.

Die DE 10 2010 016 043 A1 beschreibt eine Anzeigevorrichtung für ein Fahrzeug, die ein Anzeigeelement, ein Bilderzeugungselement zum Erzeugen eines Fahrzeugbilds, eines analogen Bilds und eines Zeigebilds und eine Anzeigesteuerung aufweist. Das analoge Bild weist eine Zeigeposition und mehrere Indizes auf, die auf einer Oberseite und einer Unterseite der Zeigeposition angeordnet sind. Das Zeigebild zeigt die aktuelle Fahrzeuggeschwindigkeit bei der Zeigeposition. Jeder Index zeigt eine entsprechende Fahrzeuggeschwindigkeit. Eine Skala mit mehreren Indizes wird in Abhängigkeit von der Beschleunigung bzw. Verzögerung des Fahrzeugs entlang einer Richtung bewegt.

Die US 2005/057377 A1 beschreibt eine Geschwindigkeitsanzeige für ein Flugzeug, bei der eine Bewegung der Geschwindigkeitsskala in Abhängigkeit vom Wert der Beschleunigung oder Verzögerung des Flugzeugs erfolgt.

Aus der DE 199 02 136 B4 ist ein Kombinationsinstrument für ein Fahrzeug bekannt, das zwei Anzeigetafeln aufweist, wobei die zweite Anzeigetafel eine niedrigere Luminanz als die erste Anzeigetafel besitzt und die beiden Anzeigetafeln miteinander kombiniert sind. Das Kombinationsinstrument weist einen Verdunklungsfilter auf, dessen Transparenz in Wellenlängenbereichen hoch gewählt ist, die einem Wellenlängenbereich des von der zweiten Anzeigetafel emittierten Lichts und einem Wellenlängenbereich von Licht entspricht, das eine Farbe besitzt, die komplementär zu einer Farbe des Lichts ist, das von der zweiten Anzeigetafel emittiert wird.

Aus der EP 1 582 393 A2 ist ein Fahrerinformationssystem bekannt, welches über eine Bedieneinheit mit einer Mehrzahl von Funktionselementen zur Auswahl von Hauptfunktionen, einer Mehrzahl von Steuerungselementen zur Auswahl von Funktionen einer Hauptfunktion, einem Auswahlelement zur Auswahl von Unterfunktionen der Funktionen und einem Returnelement für eine Rückkehr zu einer übergeordneten Ebene, verfügt. Weiterhin weist das Fahrerinformationssystem eine Anzeigeeinheit zur graphischen Darstellung von wenigstens bedieneinheitsbezogenen Informationen auf.

Weitere Kombinationsinstrumente für Fahrzeuge sind z. B. aus der EP 1 190 886 A2, der EP 1 559 995 A1 und der WO 03/057522 A1 bekannt.

Es ist die Aufgabe der vorliegenden Erfindung, ein Verfahren und eine Vorrichtung der eingangs genannten Art für ein Fahrzeug bereitzustellen, mit denen ein Betrachter im Fahrzeug einen fahrzeugspezifischen Parameter in einem Fahrzeug schnell und intuitiv erfassen kann.

Erfindungsgemäß wird diese Aufgabe durch ein Verfahren mit den Merkmalen des Anspruchs 1 sowie einer Vorrichtung mit den Merkmalen des Anspruchs 9 gelöst. Vorteilhafte Ausgestaltungen und Weiterbildungen sind Gegenstände der abhängigen Ansprüche.

Bei dem erfindungsgemäßen Verfahren werden in einem Bereich auf einer Anzeigefläche mehrere graphische Elemente beabstandet voneinander angezeigt. Es wird ein Wert des Parameters erfasst. Die graphischen Elemente werden in Abhängigkeit von dem Wert des Parameters so in eine Richtung auf der Anzeigefläche bewegt, dass ein graphisches Element aus dem Bereich verschwindet, wenn es eine erste Begrenzung des Bereichs erreicht hat, und bei einer der ersten Begrenzung gegenüberliegenden zweiten Begrenzung des Bereichs ein neues graphisches Element angezeigt wird.

Da die Bewegung der graphischen Elemente abhängig von dem Wert des Parameters ist, erlaubt es das erfindungsgemäße Verfahren vorteilhafterweise, einen Fahrzeugparameter schnell und intuitiv einzuschätzen. Dies ermöglicht es dem Fahrer, den Wert des Parameters auch dann einzuschätzen, wenn er die Anzeigefläche nur im Augenwinkel sieht. Ein genauer Blick auf die Anzeigefläche ist dazu nicht notwendig.

Bei dem erfindungsgemäßen Verfahren wird der Abstand zwischen jeweils zwei benachbarten graphischen Elementen in Bewegungsrichtung der graphischen Elemente größer. Dadurch lässt sich der Parameter auf perspektivische Art und Weise darstellen. Zudem wird bei dem Nutzer der Eindruck erweckt, als würde in dem Bereich die Fahrbahn dargestellt werden.

Insbesondere umfassen die graphischen Elemente parallel verlaufende horizontale Linien, wobei die Bewegungsrichtung der horizontalen Linien senkrecht zu den horizontalen Linien ist. Dies bedeutet, dass sich die horizontalen Linien entweder nach oben oder nach unten auf der Anzeigefläche bewegen. Insbesondere wenn die Linien auf der Anzeigefläche nach unten bewegt werden, erhält der Fahrer den Eindruck als würde er die Linien überfahren.

Der Parameter ist erfindungsgemäß die Fahrzeuggeschwindigkeit. Dies hat den Vorteil, dass die Fahrzeuggeschwindigkeit als sicherheitsrelevanter Parameter schnell und intuitiv eingeschätzt werden kann. Neben einer numerischen Anzeige kann dem Nutzer über diese Anzeige ein Gefühl für die gefahrene Geschwindigkeit gegeben werden. Dies ist insbesondere bei einem Wechsel von einer Straße, auf der mit hoher Geschwindigkeit gefahren wird, beispielsweise einer Autobahn, auf eine Straße, auf der mit niedrigerer Geschwindigkeit gefahren wird, beispielsweise einer Landstraße, von Vorteil.

Die Geschwindigkeit, mit der die graphischen Elemente auf der Anzeigefläche bewegt werden, kann insbesondere proportional zu der Fahrzeuggeschwindigkeit sein. Der Proportionalitätsfaktor kann dann bevorzugt zwischen 0 und 1 liegen, so dass die Geschwindigkeit, mit der sich die graphischen Elemente bewegen, einen niedrigeren Wert aufweist als die Fahrzeuggeschwindigkeit. Dies ist insbesondere bei hohen Geschwindigkeiten vorteilhaft. Eine zu schnelle Bewegung der graphischen Elemente auf der Anzeigefläche kann dann nämlich dazu führen, dass diese verwischen und nicht mehr voneinander unterscheidbar sind.

In einer weiteren Ausgestaltung wird ein Lenkwinkel des Fahrzeugs erfasst und die horizontalen Linien werden in Abhängigkeit von dem Lenkwinkel verändert dargestellt. Es kann also auf der Anzeigefläche auch dargestellt werden, wenn eine Kurve gefahren wird.

Die horizontalen Linien können dabei insbesondere in Abhängigkeit von dem Lenkwinkel verkürzt und/oder gekrümmt dargestellt werden. Es wird dann insbesondere durch die Seite, auf welcher die Linien verkürzt werden, und/oder die Krümmungsrichtung der horizontalen Linien dargestellt, ob es sich um eine Links- oder eine Rechtskurve handelt. Dies ist insbesondere dann vorteilhaft, wenn der Fahrer den Überblick darüber verloren hat, in welcher Position sich die Räder des Fahrzeugs gerade befinden. Dadurch, dass die Linien verkürzt und/oder verkrümmt dargestellt werden, wird der Fahrer zu jeder Zeit über den Stand der Räder informiert.

In einer weiteren Ausgestaltung wird die Bewegungsrichtung des Fahrzeugs erfasst und die Bewegungsrichtung der graphischen Elemente hängt von der Bewegungsrichtung des Fahrzeugs ab. Bei einer Vorwärtsbewegung bewegen sich die horizontalen Linien insbesondere auf den Nutzer zu und bei einer Rückwärtsbewegung von dem Nutzer weg.

Weiterhin können sich, wenn erfasst wird, dass sich das Fahrzeug vorwärts bewegt, die graphischen Elemente von der zweiten Begrenzung auf die erste Begrenzung zu bewegen und aus dem Bereich verschwinden, wenn sie die erste Begrenzung erreicht haben, wobei für jedes verschwundene graphische Element an der zweiten Begrenzung ein neues graphisches Element angezeigt wird. Wenn erfasst wird, dass sich das Fahrzeug rückwärts bewegt, können sich die graphischen Elemente von der ersten Begrenzung weg auf die zweite Begrenzung zu bewegen und aus dem Bereich verschwinden, wenn sie die zweite Begrenzung erreicht haben, wobei für jedes verschwundene graphische Element an der ersten Begrenzung ein neues graphisches Element angezeigt wird. Es kann dem Fahrer daher sowohl beim Vorwärts- wie auch beim Rückwärtsfahren die Fahrtrichtung und ein Eindruck des Fahrens vermittelt werden.

Ferner betrifft die Erfindung eine Vorrichtung zum Anzeigen eines fahrzeugspezifischen Parameters für ein Fahrzeug, wobei der Parameter die Fahrzeuggeschwindigkeit ist. Die Vorrichtung umfasst eine Anzeigeeinrichtung mit einer Anzeigefläche, eine Erfassungseinheit, mittels welcher ein Wert des Parameters erfassbar ist, und eine Steuereinrichtung. Mittels der Steuereinrichtung ist die Anzeigefläche derart ansteuerbar, dass in einem Bereich auf der Anzeigefläche mehrere graphische Elemente beabstandet voneinander anzeigbar sind und dass die graphischen Elemente in Abhängigkeit von dem Wert des Parameters so in eine Richtung auf der Anzeigefläche bewegbar sind, dass ein graphisches Elemente aus dem Bereich verschwindet, wenn es eine erste Begrenzung des Bereichs erreicht hat, und bei einer der ersten Begrenzung gegenüberliegenden zweiten Begrenzung des Bereichs ein neues graphisches Element anzeigbar ist. Der Abstand zwischen jeweils zwei benachbarten graphischen Elementen wird dabei in Bewegungsrichtung bis zur ersten Begrenzung hin größer.

Die Vorrichtung ist insbesondere zum Ausführen des erfindungsgemäßen Verfahrens geeignet. Sie weist daher alle Vorteile des Verfahrens auf. Zudem ist die Vorrichtung insbesondere so ausgestaltet, dass sie die vorstehend beschriebenen Verfahrensschritte teilweise oder vollständig ausführen kann.

Insbesondere kann die Anzeigefläche in zumindest drei Anzeigebereiche aufteilbar sein, wobei in jeweils zwei Anzeigebereichen ein Anzeigeelement anzeigbar ist, und wobei ein dritter Anzeigebereich zwischen den zwei Anzeigebereichen anzeigbar ist, in welchem der Bereich anzeigbar ist.

In einer weiteren Ausgestaltung umfasst die Vorrichtung einen Geschwindigkeitssensor und die graphischen Elemente sind in Abhängigkeit von der Fahrzeuggeschwindigkeit auf der Anzeigefläche bewegbar.

Ferner betrifft die Erfindung ein Kombinationsinstrument in einem Fahrzeug mit einer Anzeigeeinrichtung der erfindungsgemäßen Vorrichtung. Zudem betrifft die Erfindung ein Fahrzeug mit einem solchen Kombinationsinstrument.

Die Erfindung wird nun an Hand eines Ausführungsbeispiels mit Bezug zu den beigefügten Zeichnungen erläutert.
- Figur 1: zeigt schematisch die Anordnung eines Ausführungsbeispiels der erfindungsgemäßen Vorrichtung in einem Fahrzeug,
- Figur 2: zeigt den Aufbau eines Ausführungsbeispiels der erfindungsgemäßen Vorrichtung und
- Figuren 3a bis 3c: zeigen Anzeigen, wie sie von einem Ausführungsbeispiel des erfindungsgemäßen Verfahrens auf der Anzeigefläche erzeugt werden können.

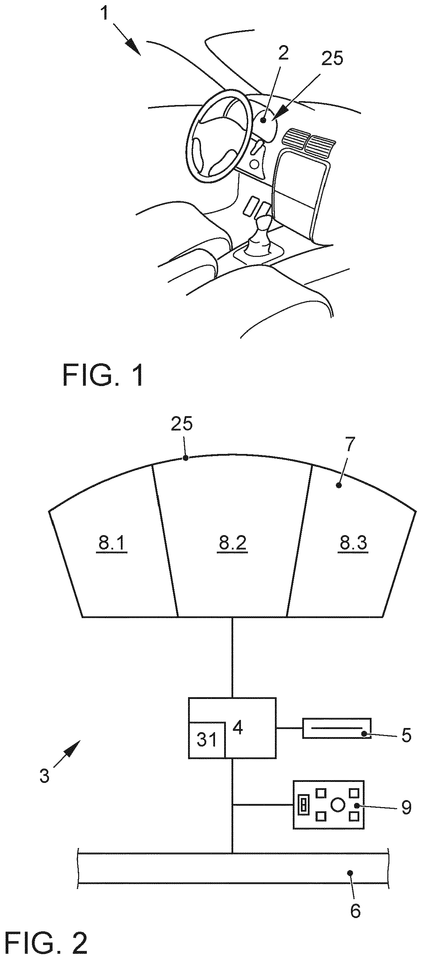

Fig. 1 zeigt ein Beispiel einer Innenansicht eines Fahrzeugs 1. In dem Fahrzeug 1 ist hinter Fig. 1 zeigt ein Beispiel einer Innenansicht eines Fahrzeugs 1. In dem Fahrzeug 1 ist hinter einem Lenkrad eine als Kombinationsinstrument 25 ausgebildete Anzeigeeinrichtung 2 angeordnet, deren Anzeige im Blickfeld bzw. in der Nähe des Blickfeldes des Fahrers liegt.

In Fig. 2 ist der prinzipielle Aufbau einer Vorrichtung 3 mit der Anzeigeeinrichtung 2 dargestellt. Die Vorrichtung 3 umfasst eine Steuereinrichtung 4, die mit einer Erfassungseinheit 6 verbunden ist. Auf diese Weise können der Steuereinrichtung 4 Daten übertragen werden, aus denen die Steuereinrichtung 4 Graphikdaten für die Anzeigefläche 7 der Anzeigeeinrichtung 2 generieren kann. Ferner kann die Steuereinrichtung 4 auch über andere Schnittstellen Daten empfangen. Beispielsweise kann die Steuereinrichtung 4 direkt mit Sensoren und Steuergeräten des Fahrzeugs 1 oder anderen Einrichtungen zur Erzeugung von Graphikdaten gekoppelt sein. Beispielsweise kann ein Mobiltelefon eines Fahrzeuginsassen mit der Steuereinrichtung 4 gekoppelt werden. Auf diese Weise kann auf die Mediendateien oder das Telefonbuch des Mobiltelefons zugegriffen werden.

Des Weiteren ist die Steuereinrichtung 4 mit einem Datenspeicher 5 verbunden, aus dem für die Erzeugung der Graphikdaten erforderliche Daten ausgelesen werden können. Der Datenspeicher 5 kann beispielsweise eine oder mehrere digitale Straßenkarten enthalten. Ferner können in dem Datenspeicher 5 Voreinstellungen, Bildparameter und Stellwerte gespeichert sein.

Zudem ist in die Steuereinrichtung 4 eine Ermittlungseinheit 31 integriert, mittels welcher für die Erzeugung der Graphikdaten erforderliche Ermittlungsschritte unternommen werden können. Die Ermittlungseinheit 31 kann insbesondere eine Recheneinheit umfassen, mittels welcher Werte berechnet werden können.

Des Weiteren ist die Steuereinrichtung 4 mit einer Bedieneinheit 9 verbunden, welche ein Bedienelement oder mehrere Bedienelemente umfasst. Mittels der Bedieneinheit 9 kann ein Nutzer die Anzeigen und Darstellungen der Anzeigeeinrichtung 2 steuern.

Die Steuereinrichtung 4 ist ferner mit einer frei programmierbaren Anzeigefläche 7 verbunden, welche verschiedene Anzeigebereiche 8.1 bis 8.3 aufweist. Dabei werden die Anzeigebereiche 8.1 bis 8.3 in Abhängigkeit von einem Anzeigemodus, in welchem sich die Anzeigeeinrichtung 2 befindet, angesteuert.

Bei der Anzeigefläche 7 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Der Anzeigefläche 7 ist eine (nicht gezeigte) Hintergrundbeleuchtung zugeordnet, die durch eine oder mehrere lichtemittierende Dioden bereitgestellt werden kann. Schließlich kann die Anzeigefläche 7 auch von einem Head-up-Display erzeugt werden.

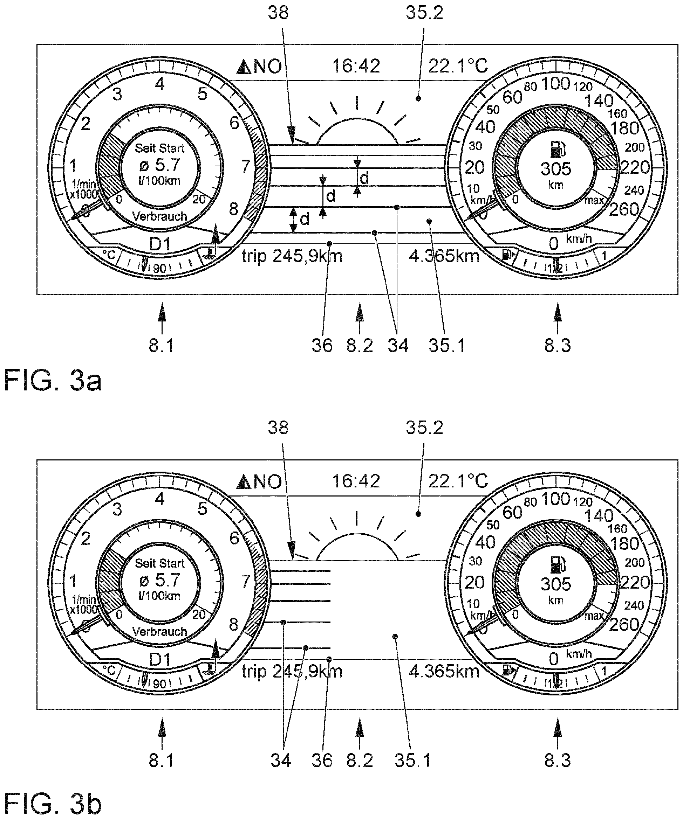

Mit Bezug zu den Figuren 3a bis 3c wird ein Ausführungsbeispiel eines erfindungsgemäßen Verfahrens erläutert.

Dabei beziehen sich die Figuren 3a bis 3c insbesondere auf Anzeigen, wie sie während des Verfahrens in dem zweiten Anzeigebereich 8.2 auf der Anzeigefläche 7 erzeugt werden können. Die Anzeige gemäß der Figuren 3a bis 3c ist jedoch auch auf jeder anderen Anzeigefläche erzeugbar und ist somit nicht auf die Anzeigefläche 7 der erfindungsgemäßen Vorrichtung 3 beschränkt.

Ausgangspunkt des Verfahrens ist, dass sich das Fahrzeug 1 im Parkmodus befindet, sich also nicht bewegt. Auf der Anzeigefläche 7 wird eine Anzeige, wie sie in Figur 3a gezeigt ist, erzeugt.

Auf der Anzeigefläche 7 ist dabei ein Bereich 35.1 angezeigt. Dieser Bereich 35.1 wird unten von einer ersten graphischen Begrenzung 36 und oben von einer zweiten graphischen Begrenzung 38, die auch als Horizont 38 bezeichnet wird, begrenzt. Der Bereich 35.1 befindet sich somit unterhalb des Horizonts 38. Der Horizont 38 stellt dabei eine graphische Abtrennung einer graphisch dargestellten Fahrbahn und eines graphisch dargestellten Himmels bereit. Der Bereich 35.1 unterhalb des Horizonts 38 stellt dabei die graphische Darstellung der Fahrbahn dar. Dabei muss die Fahrbahn nicht realitätsgetreu dargestellt werden. Der Bereich 35.2 oberhalb des Horizonts 38 stellt eine schematische Repräsentation des Himmels dar, welcher auch nicht realitätsgetreu dargestellt werden muss.

Weist das Fahrzeug 1 eine Funktion auf, mittels welcher das momentan vorherrschende Wetter ermittelbar ist, kann dies in dem Bereich 35.2 beispielsweise über Einfärbung des Bereichs 35.2 dargestellt werden.

In dem Bereich 35.1 unterhalb des Horizonts 38 werden mehrere voneinander beabstandete parallel zum Horizont 38 verlaufende horizontale Linien 34 angezeigt.

Setzt sich das Fahrzeug 1 in Bewegung, wird die Geschwindigkeit v_{F} des Fahrzeug 1 ermittelt. Diese wird in der Regel für eine allgemeine Geschwindigkeitsanzeige, beispielsweise wie sie im Anzeigeelement 10 des zweiten Anzeigebereichs 8.2 der Anzeigefläche 7 angezeigt wird, erfasst und kann ebenso für die Anzeige in dem Bereich 35.1 verwendet werden.

Aus der ermittelten Fahrzeuggeschwindigkeit v_{F} wird dann eine Geschwindigkeit v_{L} berechnet, mit welcher die horizontalen Linien 34 bewegt werden. Die Geschwindigkeit v_{L} der horizontalen Linien 34 ist beispielsweise proportional zur Fahrzeuggeschwindigkeit v_{F}. Beispielsweise kann die Geschwindigkeit v_{L} über den Zusammenhang v_{L} = α·v_{F} berechnet werden. Um zu vermeiden, dass bei hohen Fahrzeuggeschwindigkeiten v_{F} die horizontalen Linien 34 auf der Anzeigefläche 7 verwischen, soll die Geschwindigkeit v_{L} einen niedrigeren Wert als die Fahrzeuggeschwindigkeit v_{F} aufweisen. Die Proportionalitätskonstante α liegt also zwischen 0 und 1. Insbesondere ist die Proportionalitätskonstante α kleiner als 0,8. Die Proportionalitätskonstante α kann dabei über einen Algorithmus berechnet oder festgelegt werden.

Wird erfasst, dass sich das Fahrzeug 1 in Bewegung setzt, fangen die horizontalen Linien 34 an, sich über den Bereich 35.1 zu bewegen. Dabei bewegen sich die horizontalen Linien 34 von dem Horizont 38 weg nach unten in Richtung der dem Horizont 38 gegenüberliegenden ersten Begrenzung 36, welche den Bereich 35.1 nach unten abschließt. Hat eine horizontale Linie 34 die Begrenzung 36 erreicht, wird sie nicht mehr in dem Bereich 35.1 angezeigt. Gleichzeitig wird bei dem Horizont 38 eine neue horizontale Linie 34 angezeigt.

Dabei wird der Abstand d zwischen jeweils zwei benachbarten horizontalen Linien 34 in Bewegungsrichtung größer. Dadurch entsteht ein perspektivischer Eindruck, bei dem der Horizont 38 in der Ferne angezeigt wird. Durch die Bewegung der horizontalen Linien 34 und den immer größer werdenden Abstand d zwischen zwei horizontalen Linien 34 mit der Entfernung zum Horizont 38 erhält der Fahrer zudem den Eindruck, als würde er die horizontalen Linien 34 überfahren. Diese Anzeige erzeugt in dem Fahrzeug 1 ein besonderes Fahrgefühl.

Gewinnt das Fahrzeug 1 an Geschwindigkeit, wird gemäß des vorstehend angegebenen Zusammenhangs auch die Bewegung der Linien 34 schneller. Die gemessene Fahrzeuggeschwindigkeit v_{F} wird also direkt in die Geschwindigkeit v_{L} der Bewegung der horizontalen Linien 34 in dem Bereich 35.1 auf der Anzeigefläche 7 umgesetzt.

Die Bewegung der horizontalen Linien 34 auf der Anzeigefläche 7 ist insbesondere in Fahrsituationen von Vorteil, in denen der Fahrer nicht merkt, dass sich das Fahrzeug 1 bewegt. Dies kann beispielsweise dann der Fall sein, wenn das Fahrzeug 1 ein Automatikgetriebe aufweist. Fahrzeuge 1 mit Automatikgetriebe rollen bereits dann los, wenn der Fahrer den Fuß von dem Bremspedal nimmt bzw. nicht stark genug auf das Bremspedal drückt. Durch die Darstellung der horizontalen Linien 34 wird dem Fahrer visualisiert, dass er rollt. Durch die Anzeige kann der Fahrer vorteilhafterweise schneller darauf aufmerksam gemacht werden, dass er rollt.

Zudem kann von der Erfassungseinheit 6 ein Lenkwinkel des Lenkrads des Fahrzeugs 1 erfasst werden. Die Darstellung der horizontalen Linien 34 kann dann zudem in Abhängigkeit von dem Lenkwinkel erfolgen. Dabei wird der Lenkwinkel als Null definiert, wenn die Fahrzeugräder eine Geradeausstellung einnehmen. Bei einem negativen Lenkwinkel fährt das Fahrzeug 1 dann eine Linkskurve und bei einem positiven Lenkwinkel eine Rechtskurve.

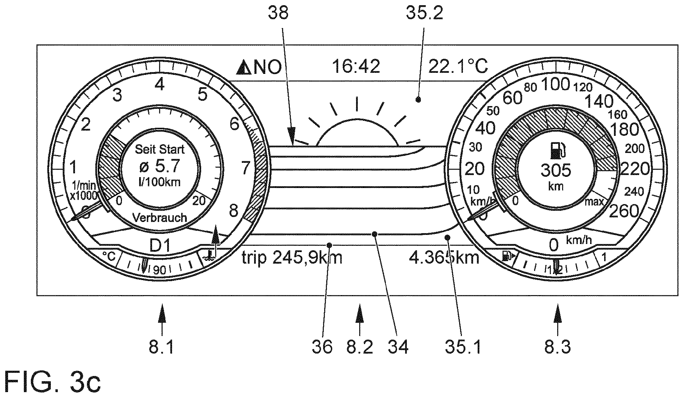

Die in Abhängigkeit von dem Lenkwinkel auf der Anzeigefläche 7 erzeugte Anzeige wird mit Bezug zu den Figuren 3b und 3c am Beispiel einer Linkskurve erläutert.

Wird ein negativer Lenkwinkel erfasst, werden die horizontalen Linien 34 in Abhängigkeit von der Größe des Lenkwinkels nach links verkürzt. Dies ist in Figur 3b gezeigt. Dabei werden die horizontalen Linien 34 umso kürzer dargestellt, je größer der Lenkwinkel ist. Bei einer Rechtskurve werden die horizontalen Linien 34 entsprechend nach rechts verkürzt.

Alternativ können die horizontalen Linien 34 auch in ihrem Verlauf verändert werden, wie es in Fig. 3c gezeigt ist. Bei einem negativen Lenkwinkel können die horizontalen Linien 34 eine Linkskrümmung erhalten, wobei die Stärke der Krümmung abhängig ist von der Größe des Lenkwinkels. Bei einer Rechtkurve werden die horizontalen Linien 34 entsprechend nach rechts gekrümmt dargestellt.

Bei starken Kurven verliert der Fahrer schnell den Überblick über den tatsächlichen Stand der Fahrzeugräder. Zwar kann sich das Lenkrad in einer vermeintlichen Geradeausstellung befinden, dies bedeutet jedoch nicht, dass die Fahrzeugräder auch tatsächlich geradeaus gerichtet sind. Durch die Darstellung des Lenkwinkels anhand einer graphischen Veränderung der horizontalen Linien 34, wird dem Fahrer verdeutlicht, ob sich die Räder des Fahrzeugs 1 in einer Geradeausstellung befinden oder nicht. Zudem wird wiederum ein besonderes Fahrgefühl innerhalb des Fahrzeugs 1 erzeugt.

Legt der Fahrer den Rückwärtsgang ein und fährt rückwärts, wird die Bewegungsrichtung der horizontalen Linien 34 umgekehrt. Die horizontalen Linien 34 bewegen sich dann von der ersten Begrenzung 36 in Richtung des Horizonts 38, d. h. der zweiten Begrenzung. Verschwindet eine horizontale Linie 34 am Horizont 38, wird eine neue horizontale Linie 34 bei der ersten Begrenzung 36 angezeigt. Zudem kann der Abstand d zwischen den Linien dann in Richtung des Horizonts 38 zunehmen.

Es wird also die Bewegungsrichtung des Fahrzeugs 1 mittels der Erfassungseinheit 6 erfasst, wobei die Bewegungsrichtung der horizontalen Linien 34 dann in Abhängigkeit von der Bewegungsrichtung des Fahrzeugs 1 bestimmt wird.

Die in der detaillierten Beschreibung beschriebenen Ausgestaltungen der Verfahren sind nicht auf eine Anzeigefläche 7 mit drei Anzeigebereichen 8.1 bis 8.3 beschränkt. Vielmehr kann jede Anzeige auch alleine auf einer beliebigen Anzeigefläche oder in Kombination mit beliebigen anderen Anzeigen angezeigt werden.

### Bezugszeichenliste

- 1: Fahrzeug
- 2: Anzeigeeinrichtung
- 3: Vorrichtung
- 4: Steuereinrichtung
- 5: Datenspeicher
- 6: Erfassungseinheit
- 7: Anzeigefläche
- 8.1 - 8.3: erster bis dritter Anzeigebereich
- 9: Bedieneinheit
- 25: Kombinationsinstrument
- 31: Ermittlungseinheit
- 34: graphische Elemente; horizontale Linien
- 35.1: Bereich
- 35.2: Bereich
- 36: erste Begrenzung
- 38: zweite Begrenzung; Horizont
- v_{F}: Fahrzeuggeschwindigkeit
- v_{L}: Geschwindigkeit der horizontalen Linien

## Patentansprüche

1. Verfahren zum Anzeigen eines fahrzeugspezifischen Parameters für ein Fahrzeug (1), wobei der Parameter die Fahrzeuggeschwindigkeit (v_{F}) ist, bei dem
in einem Bereich (35.1) auf einer Anzeigefläche (7) mehrere graphische Elemente (34) beabstandet voneinander angezeigt werden und
ein Wert der Fahrzeuggeschwindigkeit (v_{F}) erfasst wird,
wobei die graphischen Elemente (34) in Abhängigkeit von dem Wert der Fahrzeuggeschwindigkeit (v_{F}) so in eine Richtung auf der Anzeigefläche (7) bewegt werden, dass ein graphisches Element (34) aus dem Bereich (35.1) verschwindet, wenn es eine erste Begrenzung (36) des Bereichs (35.1) erreicht hat, und bei einer der ersten Begrenzung (36) gegenüberliegenden zweiten Begrenzung (38) des Bereichs (35.1) ein neues graphisches Element (34) angezeigt wird,
**dadurch gekennzeichnet, dass**
der Abstand (d) zwischen jeweils zwei benachbarten graphischen Elementen (34) in Bewegungsrichtung bis zur ersten Begrenzung (36) hin größer wird.

2. Verfahren nach Anspruch 1,
**dadurch gekennzeichnet, dass**
die graphischen Elemente (34) parallel verlaufende horizontale Linien umfassen, wobei die Bewegungsrichtung der horizontalen Linien (34) senkrecht zu den horizontalen Linien (34) ist.

3. Verfahren nach Anspruch 1,
**dadurch gekennzeichnet, dass**
die Geschwindigkeit (v_{L}), mit der die graphischen Elemente (34) auf der Anzeigefläche (7) bewegt werden, proportional zu der Fahrzeuggeschwindigkeit (v_{F}) ist.

4. Verfahren nach Anspruch 3,
**dadurch gekennzeichnet, dass**
der Proportionalitätsfaktor (a) zwischen 0 und 1 liegt, so dass die Geschwindigkeit (v_{L}), mit der sich die graphischen Elemente (34) bewegen, einen niedrigeren Wert aufweist als die Fahrzeuggeschwindigkeit (v_{F}).

5. Verfahren nach einem der Ansprüche 2 bis 4,
**dadurch gekennzeichnet, dass**
ein Lenkwinkel des Fahrzeugs (1) erfasst wird und die horizontalen Linien (34) in Abhängigkeit von dem Lenkwinkel verändert dargestellt werden.

6. Verfahren nach Anspruch 5,
**dadurch gekennzeichnet, dass**
die horizontalen Linien (34) in Abhängigkeit von dem Lenkwinkel verkürzt und/oder gekrümmt dargestellt werden.

7. Verfahren nach einem der vorhergehenden Ansprüche,
**dadurch gekennzeichnet, dass,**
die Bewegungsrichtung des Fahrzeugs (1) erfasst wird und die Bewegungsrichtung der graphischen Elemente (34) von der Bewegungsrichtung des Fahrzeugs (1) abhängt.

8. Verfahren nach einem der vorhergehenden Ansprüchen,
**dadurch gekennzeichnet, dass,**
wenn erfasst wird, dass sich das Fahrzeug (1) vorwärts bewegt, sich die graphischen Elemente (34) von der zweiten Begrenzung (38) auf die erste Begrenzung (36) zu bewegen und aus dem Bereich (35.1) verschwinden, wenn sie die erste Begrenzung (36) erreicht haben, wobei für jedes verschwundene graphische Element (34) an der zweiten Begrenzung (38) ein neues graphisches Element (34) angezeigt wird, und/oder,
wenn erfasstwird, dass sich das Fahrzeug (1) rückwärts bewegt, sich die graphischen Elemente (34) von der ersten Begrenzung (36) weg auf die zweite Begrenzung (38) zu bewegen und aus dem Bereich (35.1) verschwinden, wenn sie die zweite Begrenzung (38) erreicht haben, wobei für jedes verschwundene graphische Element (34) an der ersten Begrenzung (36) ein neues graphisches Element (34) angezeigt wird.

9. Vorrichtung (3) zum Anzeigen eines fahrzeugspezifischen Parameters für ein Fahrzeug (1), wobei der Parameter die Fahrzeuggeschwindigkeit (v_{F}) ist, mit
einer Anzeigeeinrichtung (2) mit einer Anzeigefläche (7),
einer Erfassungseinheit (6), mittels welcher ein Wert der Fahrzeuggeschwindigkeit (v_{F}) erfassbar ist, und
einer Steuereinrichtung (4), mittels welcher die Anzeigefläche (7) derart ansteuerbar ist, dass in einem Bereich (35.1) auf der Anzeigefläche (7) mehrere graphische Elemente (34) beabstandet voneinander anzeigbar sind,
wobei die graphischen Elemente (34) in Abhängigkeit von dem Wert der Fahrzeuggeschwindigkeit (v_{F}) so in eine Richtung auf der Anzeigefläche (7) bewegbar sind, dass ein graphisches Elemente (34) aus dem Bereich (35.1) verschwindet, wenn es eine erste Begrenzung (36) des Bereichs (35.1) erreicht hat, und bei einer der ersten Begrenzung (36) gegenüberliegenden zweiten Begrenzung (35.1) des Bereichs (35.1) ein neues graphisches Element (34) anzeigbar ist,
**dadurch gekennzeichnet, dass**
der Abstand (d) zwischen jeweils zwei benachbarten graphischen Elementen (34) in Bewegungsrichtung bis zur ersten Begrenzung (36) hin größer wird.

10. Vorrichtung (3) nach Anspruch 9,
**dadurch gekennzeichnet, dass**
die Anzeigefläche (7) in zumindest drei Anzeigebereiche (8.1 bis 8.3) aufteilbar ist, wobei in jeweils zwei Anzeigebereichen (8.1, 8.3) ein Anzeigeelement (10) anzeigbar ist, und wobei ein dritter Anzeigebereich (8.2) zwischen den zwei Anzeigebereichen (8.1, 8.3) anzeigbar ist, in welchem der Bereich (35.1) anzeigbar ist.

11. Vorrichtung (3) nach Anspruch 9 oder 10,
**dadurch gekennzeichnet, dass**
die Vorrichtung (3) einen Geschwindigkeitssensor umfasst und die graphischen Elemente (34) in Abhängigkeit von der Fahrzeuggeschwindigkeit (v_{F}) auf der Anzeigefläche (7) bewegbar sind.

12. Kombinationsinstrument (25) in einem Fahrzeug (1) mit einer Anzeigeeinrichtung (2) der Vorrichtung (3) nach einem der Ansprüche 9 bis 11.

13. Fahrzeug (1) mit einem Kombinationsinstrument (25) nach Anspruch 12.

## Claims

1. Method for displaying a vehicle-specific parameter for a vehicle (1),
wherein the parameter is the vehicle velocity (V_{F}), in which method
a plurality of graphical elements (34) are displayed at a distance from one another in a region (35.1) on a display surface (7), and
a value of the vehicle velocity (V_{F}) is detected,
wherein the graphical elements (34) are moved in one direction on the display surface (7), depending on the value of the vehicle velocity (V_{F}), in such a way that a graphical element (34) disappears from the region (35.1) when it has reached a first boundary (36) of the region (35.1), and a new graphical element (34) is displayed at a second boundary (38) of the region (35.1) opposite the first boundary (36),
**characterized in that**
the distance (d) between two respective adjacent graphical elements (34) increases in the movement direction up to the first boundary (36).

2. Method according to Claim 1,
**characterized in that**
the graphical elements (34) comprise parallel horizontal lines, wherein the movement direction of the horizontal lines (34) is perpendicular to the horizontal lines (34).

3. Method according to Claim 1,
**characterized in that**
the velocity (V_{L}) at which the graphical elements (34) are moved on the display surface (7) is proportional to the vehicle velocity (V_{F}).

4. Method according to claim 3,
**characterized in that**
the proportionality factor (α) is between 0 and 1, so that the velocity (V_{L}) at which the graphical elements (34) move has a lower value than the vehicle velocity (V_{F}).

5. Method according to any one of claims 2 to 4,
**characterized in that**
a steering angle of the vehicle (1) is detected, and the horizontal lines (34) are shown altered depending on the steering angle.

6. Method according to claim 5,
**characterized in that**
the horizontal lines (34) are shown shortened and/or curved depending on the steering angle.

7. Method according to any one of the preceding claims,
**characterized in that**
the movement direction of the vehicle (1) is detected, and the movement direction of the graphical elements (34) depends on the movement direction of the vehicle (1).

8. Method according to any one of the preceding claims,
**characterized in that**
if it is detected that the vehicle (1) is moving forward, the graphical elements (34) move from the second boundary (38) toward the first boundary (36) and disappear from the region (35.1) when they have reached the first boundary (36), wherein a new graphical element (34) is displayed at the second boundary (38) for each disappeared graphical element (34), and/or,
if it is detected that the vehicle (1) is moving backward, the graphical elements (34) move away from the first boundary (36) toward the second boundary (38) and disappear from the region (35.1) when they have reached the second boundary (38), wherein a new graphical element (34) is displayed at the first boundary (36) for each disappeared graphical element (34).

9. Device (3) for displaying a vehicle-specific parameter for a vehicle (1), the parameter being the vehicle velocity (V_{F}), comprising
a display means (2) having a display surface (7),
a detection unit (6) by means of which a value of the vehicle velocity (V_{F}) can be detected, and
a controller (4) by means of which the display surface (7) can be controlled in such a way that a plurality of graphical elements (34) can be displayed at a distance from one another in a region (35.1) on the display surface (7),
wherein the graphical elements (34) are movable in one direction on the display surface (7), depending on the value of the vehicle velocity (V_{F}), in such a way that a graphical element (34) disappears from the region (35.1) if it has reached a first boundary (36) of the region (35.1), and a new graphical element (34) can be displayed at a second boundary (35.1) of the region (35.1) opposite the first boundary (36),
**characterized in that**
the distance (d) between two respective adjacent graphical elements (34) increases in the movement direction up to the first boundary (36).

10. Device (3) according to claim 9,
**characterized in that**
the display surface (7) can be divided up into at least three display regions (8.1 to 8.3), wherein a display element (10) can be displayed in two respective display regions (8.1, 8.3), and wherein a third display region (8.2), in which the region (35.1) can be displayed, can be displayed between the two display regions (8.1, 8.3).

11. Device (3) according to claim 9 or 10,
**characterized in that**
the device (3) comprises a velocity sensor, and the graphical elements (34) can be moved on the display surface (7) depending on the vehicle velocity (V_{F}).

12. Combination instrument (25) in a vehicle (1) having a display means (2) of the device (3) according to any one of claims 9 to 11.

13. Vehicle (1) having combination instrument (25) according to claim 12.

## Revendications

1. Procédé d'affichage d'un paramètre spécifique au véhicule pour un véhicule (1), le paramètre étant la vitesse du véhicule (V_{F}), dans lequel
plusieurs éléments graphiques (34) sont affichés à distance les uns des autres dans une zone (35.1) sur une surface d'affichage (7) et
une valeur de la vitesse du véhicule (V_{F}) est détectée,
les éléments graphiques (34) étant déplacés, en fonction de la valeur de la vitesse du véhicule (V_{F}), dans une direction sur la surface d'affichage (7) de telle manière qu'un élément graphique (34) disparaît de la zone (35.1) quand il a atteint une première limite (36) de la zone (35.1), et un nouvel élément graphique (34) est affiché au niveau d'une seconde limite (38), opposée à la première limite (36), de la zone (35.1),
**caractérisé en ce que**
la distance (d) entre respectivement deux éléments graphiques (34) adjacents augmente dans la direction de déplacement jusqu'à la première limite (36).

2. Procédé selon la revendication 1,
**caractérisé en ce que**
les éléments graphiques (34) comprennent des lignes horizontales s'étendant en parallèle, la direction de déplacement des lignes horizontales (34) étant perpendiculaire aux lignes horizontales (34).

3. Procédé selon la revendication 1,
**caractérisé en ce que**
la vitesse (V_{L}) à laquelle les éléments graphiques (34) se déplacent sur la surface d'affichage (7) est proportionnelle à la vitesse du véhicule (V_{F}).

4. Procédé selon la revendication 3,
le coefficient de proportionnalité (a) est compris entre 0 et 1, de telle sorte que la vitesse (V_{L}) à laquelle les éléments graphiques (34) se déplacent présente une valeur inférieure à la vitesse du véhicule (V_{F}).

5. Procédé selon l'une quelconque des revendications 2 à 4,
**caractérisé en ce que**
un angle de braquage du véhicule (1) est détecté et les lignes horizontales (34) sont représentées modifiées en fonction de l'angle de braquage.

6. Procédé selon la revendication 5,
**caractérisé en ce que**
les lignes horizontales (34) sont représentées raccourcies et/ou courbées en fonction de l'angle de braquage.

7. Procédé selon l'une quelconque des revendications précédentes, **caractérisé en ce que**
la direction de déplacement du véhicule (1) est détectée et la direction de déplacement des éléments graphiques (34) dépend de la direction de déplacement du véhicule (1).

8. Procédé selon l'une quelconque des revendications précédentes, **caractérisé en ce que,**
lorsqu'il est détecté que le véhicule (1) se déplace vers l'avant, les éléments graphiques (34) se déplacent de la seconde limite (38) vers la première limite (36) et disparaissent de la zone (35.1) quand ils ont atteint la première limite (36), un nouvel élément graphique (34) étant affiché sur la seconde limite (38) pour chaque élément graphique (34) disparu, et/ou,
lorsqu'il est détecté que le véhicule (1) se déplace vers l'arrière, les éléments graphiques (34) se déplacent de la première limite (36) vers la seconde limite (38) et disparaissent de la zone (35.1) quand ils ont atteint la seconde limite (38), un nouvel élément graphique (34) étant affiché sur la première limite (36) pour chaque élément graphique (34) disparu.

9. Dispositif (3) d'affichage d'un paramètre spécifique au véhicule pour un véhicule (1), le paramètre étant la vitesse du véhicule (V_{F}), comportant
un dispositif d'affichage (2) pourvu d'une surface d'affichage (7),
une unité de détection (6), au moyen de laquelle une valeur de la vitesse du véhicule (V_{F}) peut être détectée, et
un dispositif de commande (4), au moyen duquel la surface d'affichage (7) peut être commandée de telle manière que plusieurs éléments graphiques (34) peuvent être affichés à distance les uns des autres dans une zone (35.1) sur la surface d'affichage (7),
les éléments graphiques (34) pouvant être déplacés, en fonction de la valeur de la vitesse du véhicule (V_{F}), dans une direction sur la surface d'affichage (7) de telle manière qu'un élément graphique (34) disparaît de la zone (35.1) quand il a atteint une première limite (36) de la zone (35.1), et un nouvel élément graphique (34) peut être affiché au niveau d'une seconde limite (35.1), opposée à la première limite (36) de la zone (35.1),
**caractérisé en ce que**
la distance (d) entre respectivement deux éléments graphiques (34) adjacents augmente dans la direction de déplacement jusqu'à la première limite (36).

10. Dispositif (3) selon la revendication 9,
**caractérisé en ce que**
la surface d'affichage (7) peut être divisée en au moins trois zones d'affichage (8.1 à 8.3), un élément d'affichage (10) pouvant être affiché dans respectivement deux zones d'affichage (8.1, 8.3), et une troisième zone d'affichage (8.2) pouvant être affichée entre les deux zones d'affichage (8.1, 8.3), dans laquelle la zone (35.1) peut être affichée.

11. Dispositif (3) selon la revendication 9 ou 10,
**caractérisé en ce que**
le dispositif (3) comprend un capteur de vitesse et les éléments graphiques (34) peuvent être déplacés sur la surface d'affichage (7) en fonction de la vitesse du véhicule (V_{F}).

12. Combiné d'instruments (25) dans un véhicule (1) comportant un dispositif d'affichage (2) du dispositif (3) selon l'une quelconque des revendications 9 à 11.

13. Véhicule (1) comprenant un combiné d'instruments (25) selon la revendication 12.
